# EUROPEAN PATENT APPLICATION

(11) **EP 2 669 329 A1**
(43) Date of publication of application: **04.12.2013**
(21) Application number: 12170384.7
(22) Date of filing: 01.06.2012
(51) Int. Cl.: C08L 23/10, C08L 23/12, C08L 23/14, C08J 5/18, C08J 9/00

(54) **Mineral-filled polypropylene composition for foaming**

(71) Applicant: Basell Poliolefine Italia S.r.l., 20127 Milano (IT)
(72) Inventor: Langenfelder, Dieter, 91347 Aufseß (DE); Rohrmann, Jürgen, 65779 Kelkheim (DE)
(74) Representative: Colucci, Giuseppe

(57) **Abstract**

The present invention relates to a new polypropylene composition for the production of foamed molded articles, such as finished parts for the automotive industry.

## Description

The present invention relates to thermoplastic polypropylene compositions comprising talc as a mineral filler, for use in the production of foamed molded articles having smooth surface and an inner foam structure.

Typically, integrally foamed articles having smooth, mold-imprinted surfaces are used in trim components for interior designs, e.g. in cars or airplanes. Due to their free-flowing characteristics, different blends filled with talcum have been used in such applications hitherto. The potential of talcum-reinforced blends is limited for integral foam-molding of rigid finished articles, such as car dashboards, due to their inherent low flexural stiffness. Further, the relative volumetric increase during foaming is limited. Nonetheless talcum blends, due to their excellent free-flowing properties, have allowed achieving a very uniform, homogenous foam structure and foam cell separation pattern, without inner delamination of the foam or widespread cell disrupture taking place.

It would be desirable to avoid the disadvantages of the prior art and to devise a new composite material improving volumetric gain in integral foaming of molded articles whilst retaining the advantages of the prior art blends used in foaming, notably their excellent free-flowing properties and uniform cell forming characteristics.

Accordingly, an object of the present invention is a composition comprising:
(A) from 30 to 85% , preferably from 40 to 80%, more preferably from 50 to 70% by weight of one or more propylene-based components being selected from propylene homopolymers, propylene copolymers or heterophasic propylene polymers, such first propylene-based component having a flexural modulus determined in accordance with ISO 178 higher than 800 MPa;
(B) from 1 to 20% , preferably from 3 to 15%, more preferably from 5 to 10% by weight of a heterophasic propylene polymer comprising:
   (B1) from 20 to 90% by weight, preferably from 50 to 90%, of a crystalline polypropylene;
   (B2) from 10 to 80% by weight, preferably from 15 to 60% by weight, of a copolymer of ethylene and at least one C3-C10 alpha-olefin, such copolymer containing from 10 to 70% by weight, preferably from 10 to 50% by weight, of ethylene, being soluble in xylene at room temperature, and having an intrinsic viscosity in tetrahydronaphtalene at 135°C of higher than 3.5 dl/g, preferably higher than 4 dl/g, more preferably of from 5 to 8 dl/g;
(C) from 1 to 30% , preferably from 5 to 25%, more preferably from 10 to 20% by weight, of an ethylene-based plastomer, having a hardness (Shore A, ASTM D-2240) value equal to or lower than 90 points, preferably equal to or lower than 85 points, more preferably equal to or lower than 80 points;
(D) from 5 to 30% , preferably from 8 to 25%, more preferably from 10 to 20% by weight of talc.
(E) from 0 to 10% , preferably from 1 to 10%, more preferably from 3 to 8% by weight of high-density polyethylene (HDPE); and
(F) from 0 to 1,5% , preferably from 0.1 to 1.5%, more preferably from 0.1 to 1.0%, even more preferably from 0.2 to 0.5% by weight of an anti-scratch additive.

The sum of the percentage amounts of the individual components of the composition equal to 100 percent.

The first propylene-based component (A) can suitably be a propylene homopolymer or copolymer containing up to 5% by weight of ethylene and optionally one or more C₄-C₁₀ alpha-olefin(s). Examples of C₄-C₁₀ alpha-olefins that may be used as comonomers include 1-butene, 1-pentene, 1-hexene, 4-methyl-1-pentene and 1-octene, with 1-butene being particularly preferred.

As a suitable alternative, the component (A) can be a heterophasic propylene polymer comprising a crystalline homopolymer or random copolymer matrix and from 5 to 25% by weight of a copolymer of propylene and ethylene, such copolymer containing from 40 to 60% by weight of ethylene.

Suitably said component (A) has a MFR (230 °C, 2.16 kg) value of from 10 to 150 g/10 min. Also suitably, said component (A) has a content of xylene-soluble fraction (at 25 °C) of less than 7% by weight, preferably of less than 5% by weight, even more preferably of less than 2% by weight.

According to one embodiment, said component (A) is obtained in the presence of metallocene catalysts. Particularly advantageous is the use as component (A) of metallocene-based polymers having high values of melt flow rate (MFR), preferably MFR (ISO 1133 - 230°C, 2.16 Kg) values higher that 100 g/10 min. The thus obtained compositions are endowed with good flowability behavior.

Generally said component (A) has amount of isotactic pentads higher than 95%.

The component (B) can suitably be prepared by a sequential polymerization, comprising at least two sequential steps, wherein components (B1) and (B2) are prepared in separate subsequent steps, operating in each step in the presence of the polymer formed and the catalyst used in the preceding step.

Within the second propylene-based component (B), the component (B1) can suitably be a crystalline propylene (co)polymer being for at least 85% by weight, preferably at least 90% by weight, more preferably at least 95% by weight, insoluble in xylene at 25°C.

Within the second propylene-based component (B), the component (B2) can suitably be an ethylene copolymer containing from 15 to 60% by weight, preferably from 20 to 40% by weight of a C3-C10 alpha olefin, preferably propylene, being for at least 60% soluble in xylene at room temperature. Polymer compositions suitable as component (B) are those disclosed in International Application WO 02/28958, specifically compositions comprising (percent by weight):
A) 20%-90% of a crystalline polypropylene component containing from 25% to 75% of a fraction A^{I} having a melt flow rate MFR^{I} of from 0.5 to 10 g/10 min., and from 75% to 25% of a fraction A^{II} having a melt flow rate MFR^{II} such that a ratio MFR^{II}/MFR^{I} is from 30 to 2000, preferably from 50 to 1000; and wherein fractions A^{I} and A^{II} are independently selected from the group consisting of a propylene homopolymer, a random copolymer of propylene containing up to 8% of ethylene, and a random copolymer of propylene containing up to 8% of at least one C4-C10 alpha-olefin; and
B) 10%-80% of a copolymer component of ethylene and at least one C3-C10 alpha-olefin, the copolymer containing from 10 to 70% of ethylene, and optionally minor amounts of a diene, said copolymer being soluble in xylene at room temperature, and having an intrinsic viscosity in tetrahydronaphtalene at 135°C of from 4 to 9, preferably 5 to 8, most preferably 5.5 to 7 dl/g.

Other polymer compositions suitable as component (B) are those disclosed in International Application WO 2004/087805, specifically compositions comprising (percent by weight):
A) 50-90 % of a crystalline polypropylene component comprising:
   A^{I}) from 25 to 75% of a fraction having a melt flow rate MFR^{I} of from 0.1 to 10 g/10 min.; and
   A^{II}) from 25 to 75% of a fraction having a melt flow rate value MFR^{II} equal to or lower than 100 g/10 min.;
   wherein the ratio MFR^{II}/MFR^{I} is from 5 to 60, and the fractions (A^{I}) and (A^{II}) are independently selected from the group consisting of a propylene homopolymer, a random copolymer of propylene containing up to 3% of ethylene, and a random copolymer of propylene containing up to 6% of at least one C4-C10 alpha-olefin; and
B) 10%-50% of a copolymer component of ethylene and at least one C3-C10 alpha-olefin, the copolymer containing from 15% to 50% of ethylene and optionally minor amounts of a diene; said composition having a value of the intrinsic viscosity of the fraction soluble in xylene at room temperature (about 25°C) equal to or higher than 3.5 dl/g.

According to the present invention, it is neither necessary nor desired to crosslink the components (A) and (B) by vulcanization.

Typically, the ethylene-based plastomer (C) suitable for use in the compositions of the present invention is a copolymer of ethylene with a C3-C10 alpha-olefin containing at least 20 wt%, preferably from 20 to 50 wt%, of units derived from a C3-C10 alpha-olefm (13C-NMR analysis). Preferably the ethylene-based plastomer (C) have density lower than 0.89 g/ml (measured according to ASTM D-792).

Preferred examples of ethylene-based plastomers (C) are:
● copolymers of ethylene with 1-octene having from 20 wt% to 45 wt% of units derived from 1-octene (13C-NMR analysis);
● copolymers of ethylene with 1-butene having from 20 wt% to 40 wt% of of units derived from 1-butene (13C-NMR analysis).

Typically the talc (D) suitable for use in the compositions of the present invention is in particle form having an average particle size (Sedigraph ISO 13317-3) ranging from (D50) 0.1 to 20 micrometers (µm).

According to one embodiment, when the compositions of the present invention include an amount of high-density polyethylene (HDPE), they show a substantial improvement in their resistance to scratch.

The scratch resistance is also improved, according to another embodiment, by the incorporation of minor amounts of an anti-scratch additive. Anti-scratch additives that can be used in the compositions of the invention are all those known in the art as having a lubricating effect that leads to less scratch visibility. Examples of such compounds are erucamide, oleamide and polydimethylsiloxane.

The scratch resistance is improved, according to still another embodiment, by the incorporation of higher amounts of pigments.

The above-described compounds appear to show additive scratch resistance improvement effect. The compositions of the present invention have preferably a melt flow rate value (ISO 1133 - 230°C, 2.16 Kg) of from 10 to 150 g/10 min, preferably of from 20 to 120 g/10 min.

The compositions of the present invention can be prepared by mechanically mixing its components.

The compositions of the present invention suitably show flexural modulus higher than 1000 MPa, preferably higher than 1200 MPa, more preferably higher than 1500 MPa. The compositions of the present invention also suitably show tensile modulus higher than 1000 MPa, preferably higher than 1200 MPa, more preferably higher than 1500 MPa.

The compositions of the present invention further suitably show a C-emission value of less than 50 g/10 min, preferably of less than 20 g/10 min.

The compositions of the present invention, due to the combination of properties (high stiffness, high flowability and good impact behavior) are particularly suitable for integral foaming of molded articles such as finished parts for the automotive industry, e.g. instrument panels of cars. Accordingly, another object of the present invention is a foamed article prepared from a composition according to the invention. Said foamed articles, which are not obtained by reactive modification by vulcanization, have suitably a density of from 0.5 to 1.1 g/cm3. They can be integrally foamed article, wherein the average cell size is preferably of from 5 to 500 µm.

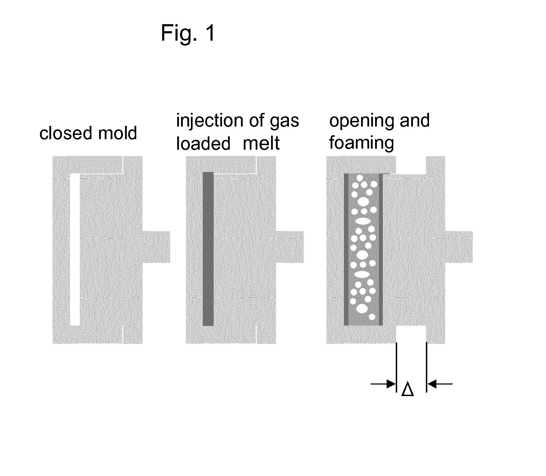

A suitable process for integral foaming of molded articles is the so-called 'breathing mold process' illustrated in Figure 1. The melt is injected into the mold, as in conventional injection molding. Prior to injection however, during melting and extruding of the melt, an inert gas is added under pressure, to be physically dissolved and homogenized in the melt (physical foaming). It is likewise possible to use chemical blowing agents, either optionally or in conjunction with such gas. Typical chemical blowing agents are inert, volatile liquids, such as e.g. lower hydrocarbons, having a boiling point of higher than 80°C whose expansion is triggered by heating the mold. Other examples are hydrogen carbonates which release carbon dioxide under heat. It is also possible to add such chemical blowing agents contained in microspheres, which microspheres allow of easier homogenization and handling and which are disrupted upon expansion. Typically, such integral foams have a sandwich structure, as essentially derived from expansion of a molded sheet; both the parallel, large surfaces flanking, as in sandwich, the foam layer, retain their dense structure as in the original sheet. After injection in the mold of gas-loaded melt, the mold volume filled with the melt polymer is caused to increase and the foam is thus formed.

Foamed articles according to the present invention can be, for example, finished parts for the automotive industry, such as dashboards, instrument panels or other interior trim components for a car.

According to a further object, the present invention provides a vehicle, such as a car or a truck, comprising a foamed article according to the invention.

The following examples are given to illustrate the present invention without any limiting purpose.

### Measurement methods

The characterization data for the propylene polymers and for the obtained films were obtained according to the following methods:

### Melt flow rate (MFR)

Determined according to ISO 1133 (230°C, 2.16 Kg).

### Tensile modulus

Determined according to ISO 527/1+2.

### Charpy

Determined according to ISO 179/1eU and /1eA.

### Scratch resistance

Determined according to GME 60280 - 10N, grain: Lynx/Cordwain after 7 days. A steel needle with defined geometry is used to create a scratched grid with defined velocity and contact force on a grained surface. The difference of brightness (dL) is measured before and after scratching. Smaller difference of brightness (dL) values indicate better scratch behavior.

### Xylene Solubles (XS)

Determined as follows: 2.5 g of polymer and 250 ml of xylene are introduced in a glass flask equipped with a refrigerator and a magnetical stirrer. The temperature is raised in 30 minutes up to the boiling point of the solvent. The so obtained clear solution is then kept under reflux and stirring for further 30 minutes. The closed flask is then kept in thermostatic water bath at 25° C for 30 minutes. The so formed solid is filtered on quick filtering paper. 100 ml of the filtered liquid is poured in a previously weighed aluminium container, which is heated on a heating plate under nitrogen flow, to remove the solvent by evaporation. The container is then kept on an oven at 80° C under vacuum until constant weight is obtained. The weight percentage of polymer soluble in xylene at room temperature is then calculated.

### Determination of isotactic pentads content

Determined as follows: 50 mg of each xylene insoluble fraction were dissolved in 0.5 mL of C₂D₂Cl₄. The ¹³C NMR spectra were acquired on a Bruker DPX-400 (100.61 Mhz, 90° pulse, 12s delay between pulses). About 3000 transients were stored for each spectrum; mmmm pentad peak (21.8 ppm) was used as reference. The microstructure analysis was carried out as described in literature (Polymer, 1984, 25, 1640, by Inoue Y. et Al. and Polymer, 1994, 35, 339, by Chujo R. et Al.).

### Hardness

### Shore A - ASTM D-2240

### Examples

All compositions described in the examples were produced with a twin-screw extruder Krupp Werner & Pfleiderer/1973, ZSK 53, screw diameter: 2 x 53, 36D with a screw rotation speed of 150 rpm and a melt temperature of 230 °C to achieve the compounds for foaming tests.

All compounds were foamed under the same processing conditions with a Battenfeld BA 1500/630 injection molding machine, melt temperature: 220 °C, mold temperature: 35 °C, injection pressure: 1500 bar, with physical blowing agent (0.4 % nitrogen). The high pressure foam process was used to produce the foamed flat plates. After injection under high pressure the material starts foaming when opening the mold by a controlled distance. This opening distance controls the final thickness of the part and thus the final density.

### Example 1 (comparative) - composition

The composition was built up with:
● 84 % MP EP348U, a heterophasic copolymer available from LyondellBasell having MFR (ISO 1133 - 230°C, 2.16 Kg) of 70 g/10 min;
● 12 % Talc Jetfine 3CA (hydrated magnesium silicate);
● 0.1 % Irganox 1010 (pentaerythriltetrakis(3-(3,5-di-tert-butyl-4-hydroxyphenyl)propionate));
● 0.1 % Irgafos 168 (tris(2,4-di-tert-butylphenyl)phosphite);
● 0.1 % Calcium Stearat - LIGA CA 860;
● 0.2 % Rikemal AS-005 (Glycerin fatty acid partial ester);
● 0.2 % Chimassorb 944 FDL (sterically hindered amine light stabilizer);
● 2 % BK MB - PE 4687 (Cabot), carbon black PE masterbatch;
● 1.3 % MP HF 500N a homopolymer available from LyondellBasell having MFR (ISO 1133 - 230°C, 2.16 Kg) of 12 g/10 min.

The main components of the final unfoamed composition are reported in table 1.

### Example 2 - composition

The composition was built up with:
● 62 % MP EP348U, a heterophasic copolymer available from LyondellBasell having MFR (ISO 1133 - 230°C, 2.16 Kg) of 70 g/10 min;
● 7% *Hifax* X 1956 A, a reactor-made TPO (thermoplastic polyolefin) available from LyondellBasell having MFR (ISO 1133 - 230°C, 2.16 Kg) of 1.2 g/10 min, an intrinsic viscosity in tetrahydronaphtalene at 135°C of the fraction soluble in xylene at room temperature of 7 dl/g, being built up with 35 % homopolymer with MFR (ISO 1133 - 230°C, 2.16 Kg) of 73 g/10 min, 35 % homopolymer with MFR (ISO 1133 - 230°C, 2.16 Kg) of 1,2 g/10 min, and 30 % ethylene/propylene copolymer with 36% by weight of ethylene units;
● 15 % Engage 8200 an ethylene-octene copolymer, having a hardness of 66 Shore A points and a density of 0.87 g/ml, marketed by Dow Chemical;
● 12 % Talc Jetfine 3CA (hydrated magnesium silicate);
● 0.1 % Irganox 1010 (pentaerythriltetrakis(3-(3,5-di-tert-butyl-4-hydroxyphenyl)propionate));
● 0.1 % Irgafos 168 (tris(2,4-di-tert-butylphenyl)phosphite);
● 0.1 % Calcium Stearat - LIGA CA 860;
● 0.2 % Rikemal AS-005 (Glycerin fatty acid partial ester);
● 0.2 % Chimassorb 944 FDL (sterically hindered amine light stabilizer);
● 2 % BK MB - PE 4687 (Cabot), carbon black PE masterbatch;
● 1.3 % MP HF 500N a homopolymer available from LyondellBasell having MFR (ISO 1133 - 230°C, 2.16 Kg) of 12 g/10 min.

The main components of the final unfoamed composition are reported in table 1.

### Example 3 - composition

The composition was built up with:
● 42 % MP EP348U, a heterophasic copolymer available from LyondellBasell having MFR (ISO 1133 - 230°C, 2.16 Kg) of 70 g/10 min;
● 20 % MC MF650Y, an ultra-high melt flow rate resin with very narrow molecular weight distribution available from LyondellBasell having MFR (ISO 1133 - 230°C, 2.16 Kg) of 1800 g/10 min;
● 7% *Hifax* X 1956 A, a reactor-made TPO (thermoplastic polyolefin) available from LyondellBasell having MFR (ISO 1133 - 230°C, 2.16 Kg) of 1.2 g/10 min, an intrinsic viscosity in tetrahydronaphtalene at 135°C of the fraction soluble in xylene at room temperature of 7 dl/g, being built up with 35 % homopolymer with MFR (ISO 1133 - 230°C, 2.16 Kg) of 73 g/10 min, 35 % homopolymer with MFR (ISO 1133 - 230°C, 2.16 Kg) of 1,2 g/10 min, and 30 % ethylene/propylene copolymer with 36% by weight of ethylene units;
● 15 % Engage 8200 an ethylene-octene copolymer, having a hardness of 66 Shore A points and a density of 0.87 g/ml, marketed by Dow Chemical;
● 12 % Talc Jetfine 3CA (hydrated magnesium silicate);
● 0.1 % Irganox 1010 (pentaerythriltetrakis(3-(3,5-di-tert-butyl-4-hydroxyphenyl)propionate));
● 0.1 % Irgafos 168 (tris(2,4-di-tert-butylphenyl)phosphite);
● 0.1 % Calcium Stearat - LIGA CA 860;
● 0.2 % Rikemal AS-005 (Glycerin fatty acid partial ester);
● 0,2 % Chimassorb 944 FDL (sterically hindered amine light stabilizer);
● 2 % BK MB - PE 4687 (Cabot), carbon black PE masterbatch;
● 1.3 % MP HF 500N a homopolymer available from LyondellBasell having MFR (ISO 1133 - 230°C, 2.16 Kg) of 12 g/10 min.

The main components of the final unfoamed composition are reported in table 1.

### Example 4 - composition

The composition was built up with:
● 48 % MC HM2015, an ultra-high melt flow rate resin with very narrow molecular weight distribution available from LyondellBasell having MFR (ISO 1133 - 230°C, 2.16 Kg) of 140 g/10 min;
● 14 % MC MF650Y, an ultra-high melt flow rate resin with very narrow molecular weight distribution available from LyondellBasell having MFR (ISO 1133 - 230°C, 2.16 Kg) of 1800 g/10 min;
● 7% *Hifax* X 1956 A, a reactor-made TPO (thermoplastic polyolefin) available from LyondellBasell having MFR (ISO 1133 - 230°C, 2.16 Kg) of 1.2 g/10 min, an intrinsic viscosity in tetrahydronaphtalene at 135°C of the fraction soluble in xylene at room temperature of 7 dl/g, being built up with 35 % homopolymer with MFR (ISO 1133 - 230°C, 2.16 Kg) of 73 g/10 min, 35 % homopolymer with MFR (ISO 1133 - 230°C, 2.16 Kg) of 1,2 g/10 min, and 30 % ethylene/propylene copolymer with 36% by weight of ethylene units;
● 15 % Engage 8200 an ethylene-octene copolymer, having a hardness of 66 Shore A points and a density of 0.87 g/ml, marketed by Dow Chemical;
●12 % Talc Jetfine 3CA (hydrated magnesium silicate);
● 0.1 % Irganox 1010 (pentaerythriltetrakis(3-(3,5-di-tert-butyl-4-hydroxyphenyl)propionate));
● 0.1 % Irgafos 168 (tris(2,4-di-tert-butylphenyl)phosphite);
● 0.1 % Calcium Stearat - LIGA CA 860;
● 0.2 % Rikemal AS-005 (Glycerin fatty acid partial ester);
● 0.2 % Chimassorb 944 FDL (sterically hindered amine light stabilizer);
● 2 % BK MB - PE 4687 (Cabot), carbon black PE masterbatch;
● 1.3 % MP HF 500N a homopolymer available from LyondellBasell having MFR (ISO 1133 - 230°C, 2.16 Kg) of 12 g/10 min.

The main components of the final unfoamed composition are reported in table 1.

### Example 5 - composition

The composition was built up with:
● 57 % MP EP348U, a heterophasic copolymer available from LyondellBasell having MFR (ISO 1133 - 230°C, 2.16 Kg) of 70 g/10 min;
● 5 % HS GC 7260, a High Density Polyethylene (HDPE) from LyondellBasell having MFR (ISO 1133 - 190°C, 2.16 Kg) of 8 g/10 min;
● 7% *Hifax* X 1956 A, a reactor-made TPO (thermoplastic polyolefin) available from LyondellBasell having MFR (ISO 1133 - 230°C, 2.16 Kg) of 1.2 g/10 min, an intrinsic viscosity in tetrahydronaphtalene at 135°C of the fraction soluble in xylene at room temperature of 7 dl/g, being built up with 35 % homopolymer with MFR (ISO 1133 - 230°C, 2.16 Kg) of 73 g/10 min, 35 % homopolymer with MFR (ISO 1133 - 230°C, 2.16 Kg) of 1,2 g/10 min, and 30 % ethylene/propylene copolymer with 36% by weight of ethylene units;
● 15 % Engage 8200 an ethylene-octene copolymer, having a hardness of 66 Shore A points and a density of 0.87 g/ml, marketed by Dow Chemical;
● 12 % Talc Jetfine 3CA (hydrated magnesium silicate);
● 0.1 % Irganox 1010 (pentaerythriltetrakis(3-(3,5-di-tert-butyl-4-hydroxyphenyl)propionate));
● 0.1 % Irgafos 168 (tris(2,4-di-tert-butylphenyl)phosphite);
● 0.1 % Calcium Stearat - LIGA CA 860;
● 0.2 % Rikemal AS-005 (Glycerin fatty acid partial ester);
● 0.2 % Chimassorb 944 FDL (sterically hindered amine light stabilizer);
● 0.3% Crodamide ER (erucamide, (Z)-Docos-13-enamid);
● 2 % BK MB - PE 4687 (Cabot), carbon black PE masterbatch;
● 1.0 % MP HF 500N a homopolymer available from LyondellBasell having MFR (ISO 1133 - 230°C, 2.16 Kg) of 12 g/10 min.

The main components of the final unfoamed composition are reported in table 1.

### Example 6 - composition

The composition was built up with:
● 57 % MP EP348U, a heterophasic copolymer available from LyondellBasell having MFR (ISO 1133 - 230°C, 2.16 Kg) of 70 g/10 min;
● 5 % HS GC 7260, a High Density Polyethylene (HDPE) from LyondellBasell having MFR (ISO 1133 - 190°C, 2.16 Kg) of 8 g/10 min;
● 7% *Hifax* X 1956 A, a reactor-made TPO (thermoplastic polyolefin) available from LyondellBasell having MFR (ISO 1133 - 230°C, 2.16 Kg) of 1.2 g/10 min, an intrinsic viscosity in tetrahydronaphtalene at 135°C of the fraction soluble in xylene at room temperature of 7 dl/g, being built up with 35 % homopolymer with MFR (ISO 1133 - 230°C, 2.16 Kg) of 73 g/10 min, 35 % homopolymer with MFR (ISO 1133 - 230°C, 2.16 Kg) of 1,2 g/10 min, and 30 % ethylene/propylene copolymer with 36% by weight of ethylene units;
● 15 % Engage 8200 an ethylene-octene copolymer, having a hardness of 66 Shore A points and a density of 0.87 g/ml, marketed by Dow Chemical;
● 12 % Talc Jetfine 3CA (hydrated magnesium silicate);
● 0.1 % Irganox 1010 (pentaerythriltetrakis(3-(3,5-di-tert-butyl-4-hydroxyphenyl)propionate));
● 0.1 % Irgafos 168 (tris(2,4-di-tert-butylphenyl)phosphite);
● 0.1 % Calcium Stearat - LIGA CA 860;
● 0.2 % Rikemal AS-005 (Glycerin fatty acid partial ester);
● 0.2 % Chimassorb 944 FDL (sterically hindered amine light stabilizer);
● 2 % BK MB - PE 4687 (Cabot), carbon black PE masterbatch;
● 1.3 % MP HF 500N a homopolymer available from LyondellBasell having MFR (ISO 1133 - 230°C, 2.16 Kg) of 12 g/10 min.

The main components of the final unfoamed composition are reported in table 1.

**Table 1**

| | Example 1 (comp.) | Example 2 | Example 3 | Example 4 | Example 5 | Example 6 |
|---|---|---|---|---|---|---|
| MP EP348U | 84 | 62 | 42 | 0 | 54 | 57 |
| MC HM2015 | 0 | 0 | 0 | 48 | 0 | 0 |
| MC MF650Y | 0 | 0 | 20 | 14 | 0 | 0 |
| Hifax X1965A | 0 | 7 | 7 | 7 | 7 | 7 |
| Engage 8200 | 0 | 15 | 15 | 15 | 15 | 15 |
| HS GC7260 | 0 | 0 | 0 | 0 | 5 | 5 |
| Talc | 12 | 12 | 12 | 12 | 12 | 12 |
| Erucamide | 0 | 0 | 0 | 0 | 0.3 | 0 |

The compositions of examples 1 (comparative), 2, 3, 4, 5 and 6 were investigated with regard to flowability, mechanical properties and scratch resistance. The obtained results are reported in table 2.

As it can be seen, the composition of example 2 achieves a Charpy notched value at room temperature of nearly tenfold in comparison to the comparative example 1.

The tensile modulus of the composition of example 3 is slightly reduced in comparison to example 1, while the impact behavior becomes more than twice improved.

The MFR value of the composition of example 4 is considerably higher compared to the comparative example 1.

The composition of example 5 shows an excellent scratch resistance behavior and surface quality combined with good foamability. The scratch values could be reduced from 4.5 (example 1) to 0.01 (example 5) at the Lynx grain and from 2.8 (example 1) to 0.1 (example 5) at the Cordwain grain.

The composition of example 6 also shows a significantly improved scratch resistance behavior without the use of erucamide.

These materials with their excellent scratch behavior are predestinated for foamed visible parts which become touched by the user, e. g. in automotive interior.

**Table 2**

| Example | Ex.1 (comp.) | Ex.2 | Ex.3 | Ex.4 | Ex.5 | Ex.6 |
|---|---|---|---|---|---|---|
| MFR [g/10min] | 50 | 27 | 57 | 86 | 22 | 23 |
| Tensile modulus [MPa] | 1766 | 1340 | 1582 | 1897 | 1202 | 1208 |
| Charpy notched at RT [KJ/m2] | 5.6 | 52.3 | 13.0 | 6.5 | 58.8 | 55.0 |
| Scratch resistance Lynx/Cordwain [dL] | 4.5/2.8 | 2.0/1.6 | 3.1/2.8 | 3.3/2.7 | 0.01/0.1 | 1.7/0.9 |

### Examples 7 (comparative) and 8 to 12- foamed articles

The compositions of examples 1 (comparative), 2, 3, 4, 5 and 6 were submitted to foaming by mold opening ("breathing mold") to obtain flat plates with 2 mm thickness (unfoamed) and 0.98 g/cm³ density. The samples were foamed with a physical blowing agent (nitrogen). Table 3 shows the results. The foaming behavior is described as a function of the opening distance. As it can be seen, the composition used in comparative example 7 shows a good foaming behavior by opening the mold from 2 mm to 4 mm. At a higher opening distance no foaming process was possible because the foam became destroyed by cell wall rupture. The outer layers of the foamed plate delaminated due to the destroyed foam structure. The lowest achievable density was 0.48 g/cm³. Conversely, the compositions used in examples 8 - 12 survived the process also by opening the mold up to 6 mm, which means that it is possible to realize higher density reductions with these materials. A final density of 0.33 g/cm³ could be achieved.

**Table 3**

| Example | Ex.7 (comp.) | | | Ex.8 | | | | Ex.9 | | | | Ex.10 | | | | Ex.11 | | | | Ex.12 | | | |
|---|---|---|---|---|---|---|---|---|---|---|---|---|---|---|---|---|---|---|---|---|---|---|---|
| Material | Ex. 1 (comp.) | | | Ex.2 | | | | Ex.3 | | | | Ex.4 | | | | Ex.5 | | | | Ex.6 | | | |
| Plate thickness after foaming [mm] | 3 | 4 | 5 | 3 | 4 | 5 | 6 | 3 | 4 | 5 | 6 | 3 | 4 | 5 | 6 | 3 | 4 | 5 | 6 | 3 | 4 | 5 | 6 |
| Total density [dl/g] | 0 64 | 0 48 | 0 38 | 0 66 | 0 49 | 0 39 | 0 33 | 0 65 | 049 | 0 39 | 0 33 | 0 65 | 0 49 | 0 39 | 0 33 | 0 65 | 0 49 | 0 39 | 0 33 | 0 65 | 0 49 | 0 39 | 0 33 |
| Cell structure | C | C | O | C | C | C | C | C | C | C | C | C | C | C | C | C | C | C | C | C | C | C | c |
| Delamination | N | N | Y | N | N | N | N | N | N | N | N | N | N | N | N | N | N | N | N | N | N | N | N |
| Foaming behavior | G | G | B | G | G | G | G | G | G | G | G | G | G | G | G | G | G | G | G | G | G | G | G |

| | | | | | | | | | | | | | | | | | | | | | | | |
|---|---|---|---|---|---|---|---|---|---|---|---|---|---|---|---|---|---|---|---|---|---|---|---|
| C=closed, O=open, N=no, Y=yes; G=good, B=bad | | | | | | | | | | | | | | | | | | | | | | | |

## Claims

1. A composition comprising:
(A) from 30 to 85% , preferably from 40 to 80%, more preferably from 50 to 70% by weight of one or more propylene-based components being selected from propylene homopolymers, propylene copolymers or heterophasic propylene polymer, such first propylene-based component having a flexural modulus determined in accordance with ISO 178 higher than 800 MPa;
(B) from 1 to 20% , preferably from 3 to 15%, more preferably from 5 to 10% by weight of a heterophasic propylene polymer comprising:
(B1) from 20 to 90% by weight, preferably from 50 to 90%, of a crystalline polypropylene;
(B2) from 10 to 80% by weight, preferably from 15 to 60% by weight, of a copolymer of ethylene and at least one C3-C10 alpha-olefin, such copolymer containing from 10 to 70% by weight, preferably from 10 to 50% by weight, of ethylene, being soluble in xylene at room temperature, and having an intrinsic viscosity in tetrahydronaphtalene at 135°C of higher than 3.5 dl/g, preferably higher than 4 dl/g, more preferably of from 5 to 8 dl/g;
(C) from 1 to 30% , preferably from 5 to 25%, more preferably from 10 to 20% by weight, of an ethylene-based plastomer, having a hardness (Shore A, ASTM D-2240) value equal to or lower than 90 points, preferably equal to or lower than 85 points, more preferably equal to or lower than 80 points;
(D) from 5 to 30% , preferably from 8 to 25%, more preferably from 10 to 20% by weight of talc.
(E) from 0 to 10% , preferably from 1 to 10%, more preferably from 3 to 8% by weight of high-density polyethylene (HDPE); and
(F) from 0 to 1,5%, preferably from 0.1 to 1.5%, more preferably from 0.1 to 1.0%, even more preferably from 0.2 to 0.5% by weight of an anti-scratch additive.

2. The composition according to claim 1, wherein the copolymer (B2) has an intrinsic viscosity in tetrahydronaphtalene at 135°C of from 5 to 8 dl/g.

3. The composition according to claims 1 or 2, wherein the component (B) comprises (percent by weight):
A) 20%-90% of a crystalline polypropylene component containing from 25% to 75% of a fraction A^{I} having a melt flow rate MFR^{I} of from 0.5 to 10 g/10 min., and from 75% to 25% of a fraction A^{II} having a melt flow rate MFR^{I} such that a ratio MFR^{II}/MFR^{I} is from 30 to 2000, preferably from 50 to 1000; and wherein fractions A^{I} and A^{II} are independently selected from the group consisting of a propylene homopolymer, a random copolymer of propylene containing up to 8% of ethylene, and a random copolymer of propylene containing up to 8% of at least one C4-C10 alpha-olefin; and
B) 10%-80% of a copolymer component of ethylene and at least one C3-C10 alpha-olefin, the copolymer containing from 10 to 70% of ethylene, and optionally minor amounts of a diene, said copolymer being soluble in xylene at room temperature, and having an intrinsic viscosity in tetrahydronaphtalene at 135°C of from 4 to 9, preferably 5 to 8, most preferably 5.5 to 7 dl/g.

4. The composition according to any of claims 1 to 3, wherein the component (B) comprises (percent by weight):
A) 50-90 % of a crystalline polypropylene component comprising:
A^{I}) from 25 to 75% of a fraction having a melt flow rate MFR^{I} of from 0.1 to 10 g/10 min.; and
A^{II}) from 25 to 75% of a fraction having a melt flow rate value MFR^{II} equal to or lower than 100 g/10 min.;
wherein the ratio MFR^{II}/MFR^{I} is from 5 to 60, and the fractions (A^{I}) and (A^{II}) are independently selected from the group consisting of a propylene homopolymer, a random copolymer of propylene containing up to 3% of ethylene, and a random copolymer of propylene containing up to 6% of at least one C4-C10 alpha-olefin; and
B) 10%-50% of a copolymer component of ethylene and at least one C3-C10 alpha-olefin, the copolymer containing from 15% to 50% of ethylene and optionally minor amounts of a diene;
said composition having a value of the intrinsic viscosity of the fraction soluble in xylene at room temperature (about 25°C) equal to or higher than 3.5 dl/g.

5. The composition according to any of claims 1 to 4, wherein the anti-scratch additive is selected among erucamide, oleamide and polydimethylsiloxane.

6. The composition according to any of claims 1 to 5, having a melt flow rate value (ISO 1133 - 230°C, 2.16 Kg) of from 10 to 150 g/10 min, preferably of from 20 to 120 g/10 min.

7. A foamed article prepared from a composition in accordance with any of the preceding claims.

8. A foamed article according to claim 7, being a finished part for use in the automotive industry.

9. A vehicle comprising a foamed article in accordance with claim 8.
